**Europäisches Patentamt**

**European Patent Office**

**Office européen des brevets**

(19)

(11) Veröffentlichungsnummer: **0 271 008**
**B1**

(12) EUROPÄISCHE PATENTSCHRIFT

(45) Veröffentlichungstag der Patentschrift:
**07.02.90**

(21) Anmeldenummer: **87117922.2**

(22) Anmeldetag: **04.12.87**

(51) Int. Cl.⁴: **B65G 17/20,** B65G 37/02,
B62D 65/00

(54) Fördereinrichtung zum Fördern von Kraftfahrzeugkarosserien.

(30) Priorität: **12.12.86 DE 3642431**

(43) Veröffentlichungstag der Anmeldung:
**15.06.88 Patentblatt 88/24**

(45) Bekanntmachung des Hinweises auf die Patenterteilung:
**07.02.90 Patentblatt 90/6**

(84) Benannte Vertragsstaaten:
**DE ES FR GB IT SE**

(56) Entgegenhaltungen:
**GB-A- 2 075 437**
**GB-A- 2 122 142**
**US-A- 4 609 093**

(73) Patentinhaber: **Bayerische Motoren Werke**
**Aktiengesellschaft, Patentabteilung**
**AJ-3 Postfach 40 02 40 Petuelring 130,**
**D-8000 München 40(DE)**

(72) Erfinder: **Melzl, Wolfgang, Neutraublingerstrasse 7,**
**D-8400 Regensburg(DE)**

(74) Vertreter: **Schweiger, Erwin, c/o Bayerische Motoren**
**Werke AG - AJ-35 Postfach 40 02 40 Petuelring 130,**
**D-8000 München 40(DE)**

ACTORUM AG

## Beschreibung

Fördereinrichtung zum Fördern von Kraftfahrzeugkarosserien

Die Erfindung bezieht sich auf eine Vorrichtung der im Oberbegriff des ersten Anspruchs angegebenen Art.

Es ist allgemein bekannt, bei der Herstellung von Kraftfahrzeugen die zu lackierenden Karosserien mit Hilfe von sog. Lackiertraversen durch die Lackiererei zu befördern. Die Lackiertraversen sind an den Stellen am Kraftfahrzeugboden angeordnet, wo sie in der Lackiererei am wenigsten stören. Dies ist überlicherweise die Lage der späteren Achsen.

Am Ende der Lackiererei zu Beginn der Endmontage müssen dann diese Lackiertraversen entfernt werden, da sonst ein Komplettieren der Karosserie nicht möglich ist.

Aus der DE-C 3 543 193 (Veröffentlichungstag 26.3.87) ist eine Förderanlage bekannt, bei welcher die Karosserien über Traversen mit einem Gehänge einer Elektrohängebahn verbunden sind. Diese Traverse dient als Angriffspunkt der Förderzeuge während des Komplettierens der Karosserie. Ein Anbringen dieser Traverse bereits in der Lackiererei würde die notwendigen Lackierarbeiten behindern und ist deshalb nicht möglich.

Aufgabe der vorliegenden Erfindung ist es, eine Vorrichtung vorzuschlagen, mit welcher ein schnelles Wechseln einer Traverse gegen eine andere möglich ist.

Diese Aufgabe wird erfindungsgemäß durch die kennzeichnenden Merkmale des ersten Anspruchs gelöst. Durch die Verwendung einer Fördereinrichtung mit zwei unabhängigen Aufnahmeeinrichtungen ist es möglich, die Karosserie zuerst über die Lackiertraversen aufzunehmen, dann die Montagetraversen zu montieren und anschließend ohne Wechsel bzw. Absetzen der Karosserie diese über die Montagetraverse zu greifen und die Lackiertraversen freizugeben, so daß diese entfernt werden können. Der besondere Vorteil der erfindungsgemäßen Vorrichtung liegt also darin, daß durch eine einmalige Aufnahme der Karosserie von einer Fördereinrichtung ein Wechsel in den Aufnahmepunkten der Karosserie für des Gehänge möglich ist. Hierbei ist es gleichgültig, ob es sich bei der Fördereinrichtung um ein Flurförderzeug oder um ein Gehänge handelt. Bevorzugt wird die Fördereinrichtung als Gehänge ausgebildet. Bei Verwendung eines Gehänges besteht die einfache Möglichkeit der Automatisierung des Traversenwechselvorganges, da die Karosserie von unten frei zugänglich ist und über das Gehänge genau positioniert werden kann.

Die Weiterbildung nach Anspruch 2 beschreibt vorteilhaft ausgestaltete Aufnahmeeinrichtungen, die einfach gesteuert werden können.

Durch die Weiterbildung nach Ansprüchen 3 und 4 wird eine robuste und zuverlässig arbeitende Antriebseinrichtung für die erste Aufnahmeeinrichtung beschrieben, bei der ein zwangsweises Verschwenken der Arme sicher erfolgt.

In Verbindung mit dieser Aufnahmeeinrichtung hat die Weiterbildung nach Anspruch 5 den Vorteil, daß bei der Übernahme der Karosserie von einer Aufnahmeeinrichtung zur anderen ein zwangsweises Absenken der Karosserie auf die zweite Aufnahmeeinrichtung stattfindet, bevor die erste Aufnahmeeinrichtung die erste Traverse freigibt.

Anspruch 6 beschreibt eine bevorzugte Ausgestaltung der Antriebseinrichtung. Der Vorteil dieser Lösung besteht darin, daß ein einziger Motor die Arme einer Seite der ersten Aufnahmeeinrichtung steuert, so daß eine absolute Synchronisierung der Bewegungen möglich ist. Darüber hinaus bedeutet dies Gewichtsersparnis und eine gleichmäßige Gewichtsverteilung der beiden Motore für jede Seite.

Anspruch 7 beschreibt ein einfach aufgebaute Antriebseinrichtung für die zweite Aufnahmeeinrichtung.

Die Weiterbildung nach Anspruch 8 hat den Vorteil, daß bei Verwendung von Montagetraversen, wie sie die DE-C 3 543 193 beschreibt, die Fördereinrichtung nicht geändert werden muß, wenn sich die Montagetraverse aufgrund eines anderen Karosserietyps in ihrer Lage verändert. Durch den verfahrbaren Schlitten kann diese Lageänderung ausgeglichen werden.

Die Ansprüche 9 und 10 beschreiben einen vorteilhaften Aufbau der Verriegelungseinrichtung der ersten Aufnahmeeinrichtung. Die Verriegelungseinrichtung ist dabei so gewählt, daß ein zwangsweises Freigeben der Andockpunkte an der Lackiertraverse eintritt, daß aber dies erst dann eintritt, wenn die zweite Aufnahmeeinrichtung die Karosserie übernommen hat. Auch ist durch diese Anordnung sichergestellt, daß das Verriegeln an den Lackiertraversen selbsttätig erfolgt.

Im folgenden wird die Erfindung anhand eines bevorzugten Ausführungsbeispiels näher beschrieben. Es stellen dar:

Fig. 1 eine schematisierte Seitenansicht der erfindungsgemäßen Fördereinrichtung;

Fig. 2 eine erste Ausbildung der ersten Aufnahmeeinrichtung;

Fig. 3 eine alternative Ausbildung der ersten Aufnahmeeinrichtung;

Fig. 4 eine Seitenansicht der erfindungsgemäßen zweiten Aufnahmeeinrichtung.

Die Erfindung wird im folgenden erläutert am Beispiel einer Elektrohängebahn. Sie läßt sich jedoch genausogut an einem Bodenführer verwirklichen.

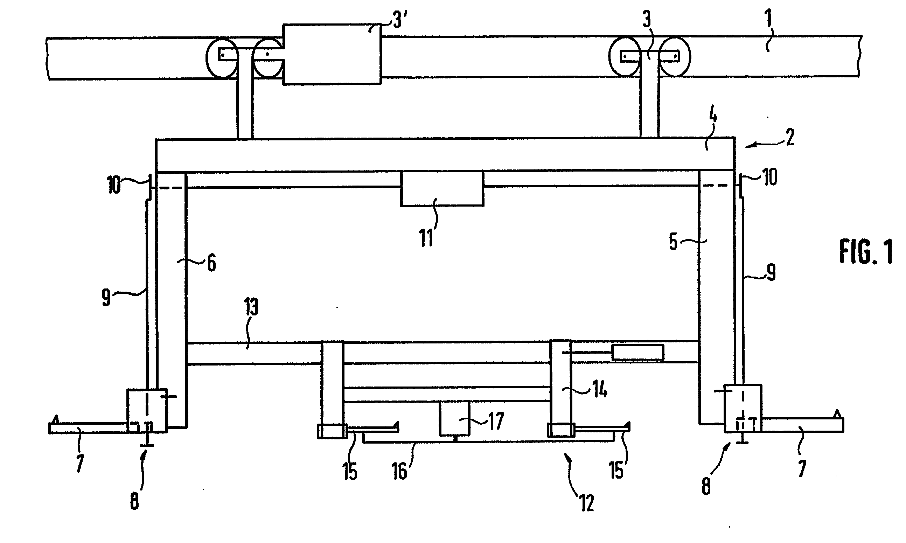

In Fig. 1 ist schematisch als Trageinrichtung ein Laufschiene 1 dargestellt, die in bekannter Weise an einer Decken- oder Dachkonstruktion einer Montagehalle befestigt ist. In dieser Laufschiene 1 ist als Halteeinrichtung ein Gehänge 2 antreibbar verfahrbar angeordnet. Das Gehänge 2 weist hierzu ein Fahrwerk 3 und einen Motor 3' auf, welches in der Laufschiene 1 geführt ist. Das Gehänge 2 besteht aus einem nach unten und in und entgegengesetzt der Laufrichtung offenen Rahmen 4.

An dem Rahmen 4 ist an den vier vertikal ausgerichteten Rahmenteilen 5,6 (die beiden hinteren sind nicht dargestellt) je ein Arm 7 der ersten Aufnahmeeinrichtung 8 befestigt. Die Arme 7 sind drehbar auf Spindeln 9 gelagert, die über je einen Exzenter 10 und einen Antriebsmotor 11 bewegt werden. Der Antriebsmotor 11 ist zweifach vorhanden, und zwar einer für jede Längsseite. Dadurch wird gewährleistet, daß die Arme 7 einer Seite des Gehänges 2 synchron bewegt werden und das Gehänge gleichmäßig belastet wird.

Zwischen den beiden Aufnahmeeinrichtungen 8 einer jeden Seite ist die zweite Aufnahmeeinrichtung 12 vorgesehen. Hierzu weist der Rahmen 4 ein die beiden Rahmenteile 5 und 6 verbindendes Rahmenlängsteil 13 auf. Die zweite Aufnahmeeinrichtung 12 besteht aus einem längsverfahrbaren Schlitten 14, der an dem Rahmenlängsteil 13 gelagert ist. Zur Aufnahme der Karosserie dienen ebenfalls beweglich verfahrbare Arme 15, die über eine Verbindungsstange 16 mit einem Antriebsmotor 17 gekoppelt sind. Selbstverständlich ist auf der anderen Gehängeseite die gleiche zweite Aufnahmeeinrichtung 12 vorgesehen. Dadurch ist es möglich, die Fördereinrichtung über eine Fahrzeugkarosserie zu fahren und diese über die Aufnahmeeinrichtungen 8 bzw. 12 aufzunehmen.

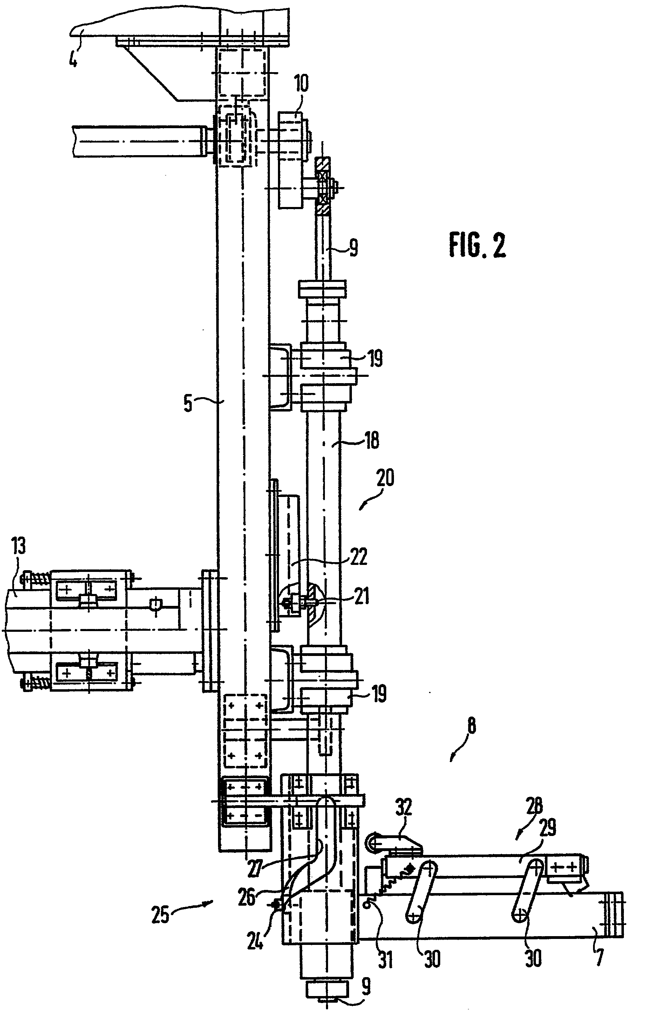

In Fig. 2 ist eine der vier Ecken des Gehänges 2 dargestellt, und zwar das Rahmenteil 5 mit der ersten Aufnahmeeinrichtung 8. Weiterhin ist hier ein Teil des Rahmenlängsträgers 13 sichtbar. Im folgenden wird nun der detaillierte Aufbau der ersten Aufnahmeeinrichtung 8 nebst ihrem Antrieb näher beschrieben.

Die Aufnahmeeinrichtung 8 besteht, wie eingangs schon erwähnt, aus dem Arm 7, der drehbar um die Hubstange 18 gelagert ist. Die Hubstange 18 ist in Richtung ihrer Längsachse verfahrbar aber unverdrehbar über Lager 19 an dem Rahmenteil 5 befestigt. Als Verdrehsicherung 20 dient ein mit der Hubstange verbundener Bolzen 21, der in einer Längsführung 22, die an dem Rahmenteil 5 befestigt ist, geführt ist.

In der Hubstange 18 ist die Spindel 9 geführt. Diese ist an ihrem unteren freien Ende derart ausgebildet, daß bei einer Hubbewegung der Spindel 9 ebenfalls die Hubstange 18 und so auch der Arm 7 mitgenommen wird. An ihrem freien oberen Ende ist sie mit dem Exzenter 10 verbunden, und zwar über eine Rollenlagerung 23. Der Exzenter 10 ist mit dem in Fig. 2 nicht dargestellten Motor 11 verbunden und wird von diesem gedreht.

Um nun die Schwenkbewegung des Armes 7 zu erreichen, weist er einen Kulissenstein 24 auf, der mit einer mit dem Rahmenteil 5 festverbundenen Kulissenführung 25 zusammenwirkt. Die Kulissenführung 25 besteht aus einem bogenförmigen Abschnitt 26 und einem geraden, vertikal ausgerichteten Abschnitt 27.

An dem Arm 7 ist weiterhin die Verriegelungseinrichtung 28 zum Verriegeln einer angekuppelten Montagetraverse oder Lacktraverse dargestellt. Die Verriegelungseinrichtung 28 ist parallelogrammartig aufgebaut und weist hierzu eine parallel zu dem Arm 7 gelagerte Klemmstange 29 sowie den beiden diese Klemmstange 29 mit dem Arm 7 verbindenden Glieder 30 auf. Die Klemmstange 29 ist über eine Feder 31 im Öffnungssinne gehalten.

Die Aufnahmeeinrichtung 8 arbeitet folgendermaßen. Dargestellt ist in Fig. 2 die Ruhestellung der Aufnahmeeinrichtung, d. h. der Arm 7 ist in Richtung der Verfahrbewegung des Gehänges 2 bzw. in Gegenrichtung geschwenkt, so daß das Gehänge 2 zu einer abgestellten Kraftfahrzeugkarosserie verfahren werden kan, um diese aufzunehmen. Sobald das Gehänge entsprechend positioniert ist an der abgestellten Kraftfahrzeugkarosserie, wird der Motor 11 betätigt. Dadurch dreht sich der Exzenter 10. Dies hat zur Folge, daß die Spindel 9 und damit die Hubstange 18 angehoben werden. Aufgrund der Kulissenführung 25 und des Kulissensteins 24 sowie des gebogenen Kulissenabschnittes 26 wird dadurch der Arm 27 einwärts geschwenkt und dabei gleichzeitig leicht angehoben. Eine weitere Bewegung des Exzenters 10 und der dadurch erzwungenen Hubbewegung der Spindel 9 und der Hubstange 20 bewirken nun ein Anheben des Armes 7, weil nunmehr der Kulissenstein 24 in dem Kulissenabschnitt 27 läuft. Durch dieses Anheben ergreift der Arm 7 von unten an die abgestellte Kraftfahrzeugkarosserie bzw. an die dort befestigte Lackier- oder Montagetraverse. Dadurch kann der Arm 7 die Traverse von unten umgreifen und somit die damit verbundene Karosserie anheben. Die Verriegelungseinrichtung 28 wird automatisch in die Verriegelungsposition gegen die Kraft der Feder 31 gebracht, indem der an der Klemmstange angebrachte Anschlag 32 mit einem an dem Rahmenteil 5 angebrachten, hier nicht näher dargestellten, Gegenanschlag zusammenwirkt, der die Klemmstange 29 in Richtung auf die Traverse bewegt, so daß die Klemmstange 29 näher an die Oberfläche des Armes 7 heranbewegt wird. Der Gegenanschlag ist hierbei derart angeordnet, daß die formschlüssige Verbindung zwischen Anschlag 32 und Gegenanschlag bei Erreichen der Endstellung im eingeschwenkten Zustand aufrechterhalten wird. Diese Stellung ist dadurch definiert, daß der Kulissenstein 24 am oberen Ende des Kulissenabschnittes 27 angelangt ist, d.h. die Spindel 9 und die Hubstange 19 sind vollständig angehoben. Diese Stellung wird dann erreicht, wenn der Exzenter 10 aus der in Fig. 2 dargestellten Stellung um 180° verdreht ist. In dieser Stellung wird der Exzenter 10 über seinen Antriebsmotor 11 gehalten.

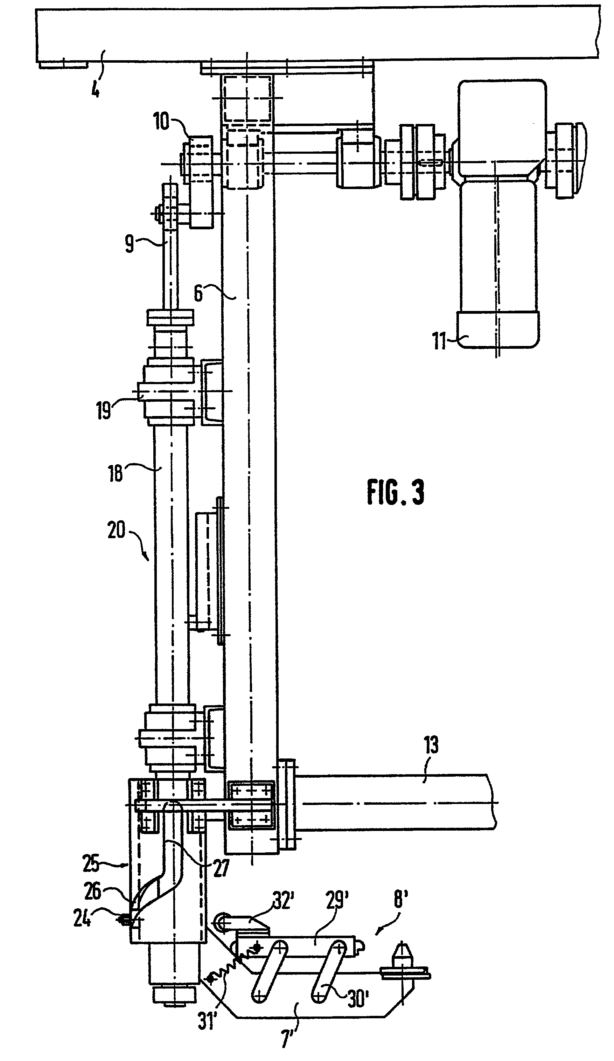

In Fig. 3 ist eine alternative Ausführungsform der Aufnahmeeinrichtung 8' und der Verriegelungseinrichtung 28' dargestellt. Der Arm 7' unterscheidet sich von dem in Fig. 2 durch die zapfenartige Ausbildung seines Aufnahmenendes zur Verbindung mit einer Traverse bzw. Karosserie. Die Verriegelungseinrichtung 28' ist aus den gleichen Elementen wie in Fig. 2 aufgebaut, nur ist ihr vorderes freies Ende entsprechend dem andersartigen Aufbau des Armes 7 ausgebildet. Auch hier wird die Verriegelungseinrichtung 28' über einen Anschlag 32' und einen nicht dargestellten Gegenanschlag in die Verriegelungsposition zwangsläufig gebracht bei der an der Verschwenkbewegung des Armes 7 sich anschließenden Hubbewegung. Geöffnet wird die Verriegelungseinrichtung 28' ebenfalls über eine Feder 31'.

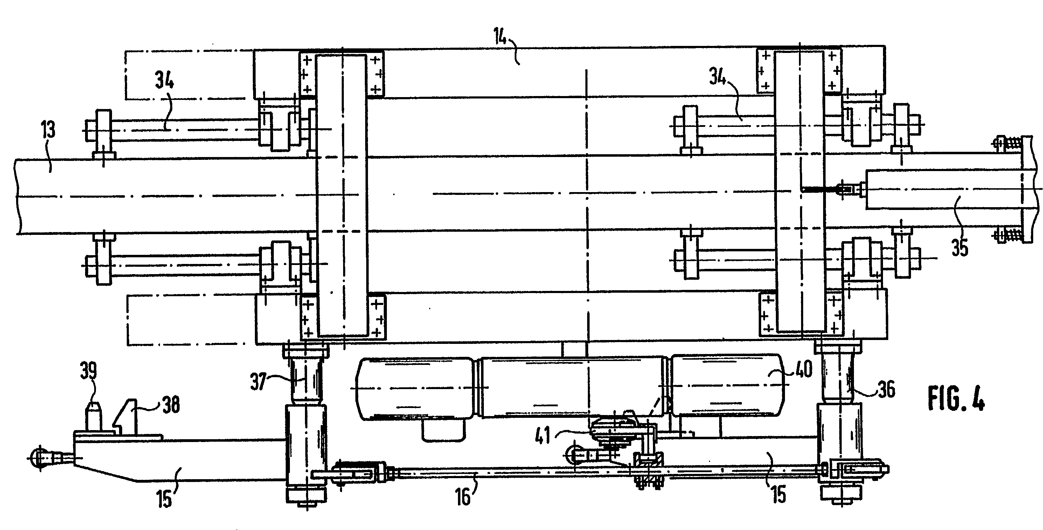

In Fig. 4 ist die zweite Aufnahmeeinrichtung 12 dargestellt. Sie ist - wie eingangs schon erwähnt - an dem Rahmenlängsträger 13 befestigt. Die zweite Aufnahmeeinrichtung 12 besteht im wesentlichen aus einem verfahrbar angeordneten Schlitten 14, der über entsprechende Führungen 34 an dem Rahmenlängsträger 13 befestigt ist. Angetrieben wird der Schlitten 14 von einer Kolben-Zylinder-Einheit 35, die an dem Rahmenlängsträger 13 einerseits und an dem Schlitten 14 andererseits angreift. Es sind jedoch auch alle anderen geeigneten bekannten Antriebsmotore denkbar.

Der Schlitten 14 trägt an seinem unteren freien Ende zwei Säulen 36,37, an denen die Arme 15 verschwenkbar befestigt sind. Am vorderen freien Ende der Arme 15 ist eine Aufnahme zum Verbinden mit einer Montagetraverse sowie ein Verriegelungszapfen 38 vorgesehen. Die spezielle Ausbildung der Aufnahme 39 hängt von der aufzunehmenden Traverse bzw. von dem aufzunehmenden Fahrzeug ab.

Verschwenkt werden die Arme 15 von einem als Motor-Getriebe-Einheit 40 ausgebildeten Antriebsmotor 17, die dem Schlitten 14 befestigt ist. Hierzu ist der Getriebeausgang mit einem Winkelhebel 41 verbunden, der an seinem vorderen freien Ende mit der Verbindungsstange 16 in Verbindung steht, die wiederum mit ihren beiden Enden an den Armen 15 angreift. Somit werden durch ein Verdrehen des Winkelhebels 41 die beiden Arme 15 eines jeden Schlittens 14 um 90° verschwenkt, so daß eine Montagetaverse aufgenommen oder freigegeben werden kann.

Die erfindungsgemäße Fördereinrichtung arbeitet wie folgt. Eine Fahrzeugkarosserie mit auf den Höhen der späteren Vorder- und Hinterachse befestigten Lackiertraversen wird über eine geeignete Fördereinrichtung angeliefert. Die Lackiertraversen weisen freie Angriffsflächen auf. Sodann wird das Gehänge 2 zu der angelieferten Kraftfahrzeugkarosserie in der Laufschiene 1 verfahren. Dann werden die beiden Antriebsmotore 11 der vier Aufnahmeeinrichtungen 8 betätigt. Dadurch verschwenken die Arme 7 in Richtung auf die Lackiertraverse und werden gleichzeitig angehoben, so daß sie von unten gegen die Lackiertraverse fahren können. Sobald sie ihre Arbeitsstellung erreicht haben, wird aufgrund des Anschlages 32 und der nicht näher dargestellten Gegenanschläge die Arme 7 mit der Lackiertraverse verriegelt. Aufgrund des gleichzeitigen Anhebens hängt nun die Kraftfahrzeugkarosserie in dem Gehänge 2.

Sodann werden entweder von Hand oder automatisch an der Kraftfahrzeugkarosserie die Montagetraversen an beiden Längsholmen befestigt. Dann wird der Antriebsmotor 17 der zweiten Aufnahmeeinrichtungen 12 betätigt. Dadurch werden die Arme 15 unter die Montagetraverse geschwenkt. Anschließend werden die beiden Antriebsmotore 11 der Aufnahmeeinrichtungen 1 betätigt. Aufgrund des Exzenters und der Kulissenführung werden nun zuerst die Arme 7 abwärts bewegt. Hierbei wird die Kraftfahrzeugkarosserie über die Montagetraverse auf die Arme 15 abgesetzt, so daß bei einer weiteren Bewegung der Arme 7 nun über die Kulissenführung und den Kulissenabschnitt 27 die Arme nach außen wegschwenken können. Aufgrund des nicht dargestellten Gegenanschlages für den Anschlag 32 und dessen Anordnung ist vor dem Beginn der Verschwenkbewegung der Arme 7 die Verriegelungseinrichtung 28 an jedem Arm gelöst worden, so daß die Lackiertraversen nun frei sind. Sie können nun von Hand oder automatisch abmontiert werden.

Sodann kann das Gehänge die Kraftfahrzeugkarosserie zu Endmontageplätzen oder zu einer weiteren Fördereinrichtung transportieren, beispielsweise einem Flurförderzeug, auf dem die Kraftfahrzeugkarosserie über die Montagetraverse gehalten wird.

## Patentansprüche

1. Fördereinrichtung zum Fördern von Kraftfahrzeugkrosserien, bestehend aus einer Trageinrichtung mit daran verfahrbar befestigtem Halteeinrichtung, die eine Aufnahmeeinrichtung zum Verbinden mit einr mit der Karosserie lösbar verbundenen Traverse aufweist, dadurch gekennzeichnet, daß die Halteeinrichtung (Gehänge 2) eine zweite Aufnahmeeinrichtung (12) aufweist, die mit weiteren, mit der Karosserie verbindbaren Traversen koppelbar ist.

2. Fördereinrichtung nach Anspruch 1, dadurch gekennzeichnet, daß die beiden Aufnahmeeinrichtungen (8,12) aus unabhängig antreibbaren, verschwenkbar gelagerten Armen (7 bzw. 15) bestehen.

3. Fördereinrichtung nach Anspruch 2 einem der dadurch gekennzeichnet, daß die Arme (7) der ersten Aufnahmeeinrichtung (8) auf einer heb- und senkbaren Antriebseinrichtung verdrehbar befestigt sind.

4. Fördereinrichtung nach Anspruch 2, dadurch gekennzeichnet, daß die Arme (7) der ersten Aufnahmeeinrichtung (8) mit einer Kulissenführung (25) zusammenarbeitet, wobei der Kulissenstein (24) an den Armen (7) angeordnet ist.

5. Fördereinrichtung nach Anspruch 4, dadurch gekennzeichnet, daß die Kulissenführung (25) aus einem geradlinig vertikal verlaufenden Kulissenabschnitt (27) und einem sich daran anschließenden kurvenförmigen Abschnitt (26) besteht.

6. Fördereinrichtung nach einem der Ansprüche 3–4, dadurch gekennzeichnet, daß die Antriebseinrichtung aus einem Exzenter (10) besteht, der von einem Elektromotor (11) angetrieben ist.

7. Fördereinrichtung nach einem der Ansprüche 2–6, dadurch gekennzeichnet, daß die verschwenkbar gelagerten Arme (5) der zweiten Aufnahmeeinrichtung (12) über eine Verbindungsstange (16) miteinander verbunden sind, die mit einer Antriebseinrichtung (Antriebsmotor 17) in Verbindung steht.

8. Fördereinrichtung nach einem der vorangegangenen Ansprüche, dadurch gekennzeichnet, daß die zweite Aufnahmeeinrichtung (15) auf einem antreibbar gelagerten Schlitten (14) vorgesehen ist, der in der Halteeinrichtung geführt ist.

9. Fördereinrichtung nach einem der vorangegangenen Ansprüche 2–8, dadurch gekennzeichnet, daß die Arme (7) der ersten Aufnahmeeinrichtung (8) federbelastete Verriegelungseinrichtungen (28) aufweisen, die zwangsgesteuert über die Drehbewegung der Arme (7) in ihre beiden Endstellungen betätigbar ist.

10. Fördereinrichtung nach Anspruch 9, dadurch gekennzeichnet, daß die Verriegelungseinrichtung (28) parallelogrammartig aufgebaut ist, wobei die verschwenkbare Grundseite (29) federbelastet ist.

## Claims

1. A transport device for transporting motor vehicle bodies, comprising a carrier device with a retaining device secured in mobile manner thereto and including a take-up device for connection with a cross-piece detachably connected with the body, characterised in that the retaining device (hanger attachment 2) comprises a second take-up device (12) which is couplable with further cross-pieces connectable with the body.

2. A transport device according to Claim 1, characterised in that the two take-up devices (8, 12) comprise independently-drivable, pivotably-mounted arms (7 and 15 respectively).

3. A transport device according to Claim 2, characterised in that the arms (7) of the first take-up device (8) are rotatably secured on a raisable and lowerable drive device.

4. A transport device according to Claim 2, characterised in that the arms (7) of the first take-up device (8) co-operate with a slideway guide (25), the slide block (24) being arranged on the arms (7).

5. A transport device according to Claim 4, characterised in that the slideway guide (25) comprises a rectilinearly vertically-extending slideway section (27) and a section (26) of curved form adjoining this.

6. A transport device according to any one of Claims 3–4, characterised in that the drive device comprises an eccentric (10) which is driven by an electric motor (11).

7. A transport device according to any one of Claims 2–6, characterised in that the pivotably-mounted arms (15) of the second take-up device (12) are connected with one another through a connecting rod (16) which is in communication with a drive device (drive motor 17).

8. A transport device according to any one of the preceding Claims, characterised in that the second take-up device (15) is provided on a drivably-mounted carriage (14) which is guided in the retaining device.

9. A transport device according to any one of the preceding Claims 2–8, characterised in that the arms (7) of the first take-up device (8) comprise spring-loaded locking devices (28) which are actuatable into their two end positions under positive control by the rotating movements of the arms (7).

10. A transport device according to Claim 9, characterised in that the locking device (28) is of parallelogram-type assembly, the pivotable base side (29) being spring-loaded.

## Revendications

1. Dispositif de transport pour le transport de carrosseries de véhicule à moteur, constitué par un dispositif de support avec, fixé à celui-ci de façon à être déplaçable un dispositif de maintien, qui comporte un équipement de réception pour sa liaison avec une traverse reliée de façon amovible à la carrosserie, dispositif de transport caractérisé en ce que le dispositif de maintien (appareil de suspension 2) comporte un second équipement de réception (12), qui peut être accouplé avec d'autres traverses reliables à la carrosserie.

2. Dispositif de transport selon la revendication 1, caractérisé en ce que les deux équipements de réception (8, 12) sont constitués par des bras (7 ou 15) montés pivotants, s'actionnant indépendamment l'un de l'autre.

3. Dispositif de transport selon la revendication 2, caractérisé en ce que les bras (7) du premier équipement de réception (8) sont fixés, de façon à pouvoir tourner, sur un dispositif d'entraînement susceptible d'être élevé et abaissé.

4. Dispositif de transport selon la revendication 2, caractérisé en ce que les bras (7) du premier équipement de réception (8) coopèrent avec un guide de coulisse (25), le coulisseau (24) étant monté sur les bras (7).

5. Dispositif de transport selon la revendication 4, caractérisé en ce que le guide de coulisse (25) est constitué par un tronçon de coulisse (27) s'étendant verticalement en ligne droite et un tronçon (26) curviligne lui faisant suite.

6. Dispositif de transport selon l'une des revendications 3–4, caractérisée en ce que le dispositif d'entraînement est constitué par un excentrique (10), qui est actionné par un moteur électrique (11).

7. Dispositif de transport selon l'une des revendications 2–6, caractérisé en ce que les bras (15) montés pivotants du second équipement de réception (12) sont reliés l'un à l'autre par l'intermédiaire d'une tige de liaison (16), qui est elle-même en liaison avec un dispositif d'entraînement (moteur d'entraînement 17).

8. Dispositif de transport selon l'une des revendications précédentes, caractérisé en ce que le second équipement de réception (12) est prévu sur un chariot (14) monté de façon à pouvoir être entraîné, et qui est guidé dans le dispositif de maintien.

9. Dispositif de transport selon l'une des revendications 2–8, caractérisé en ce que les bras (7) du premier équipement de réception (8) sont pourvus de dispositifs de verrouillage (28), chargés par ressorts, qui peuvent s'actionner dans leurs deux positions terminales par commande forcée sous l'effet du mouvement de rotation des bras (7).

10. Dispositif de transport selon la revendication 9, caractérisé en ce que le dispositif de verrouillage (28) est constitué à la manière d'un parallélogramme, le côté de base pivotant (29) étant chargé par un ressort.

FIG. 1

FIG. 2

FIG. 3

FIG. 4

EP 0 271 008 B1